# EUROPÄISCHE PATENTSCHRIFT

(11) **EP 3 314 148 B1**
(45) Veröffentlichungstag und Bekanntmachung des Hinweises auf die Patenterteilung: **08.05.2019**
(21) Anmeldenummer: 16730407.0
(22) Anmeldetag: 21.06.2016
(51) Int. Cl.: F16G 13/16, H02G 11/00

(54) **ENERGIEFÜHRUNGSKETTE**
DRAG CHAIN
CHAÎNE PORTE-CÂBLES

(30) Priorität: 24.06.2015 DE 102015110162
(43) Veröffentlichungstag der Anmeldung: 02.05.2018
(73) Patentinhaber: Industreer GmbH, 34134 Kassel (DE)
(72) Erfinder: LUEDECKE, Wolfgang, 34295 Edermuende (DE); GROSSMANN, Volker, 07407 Rudolstadt (DE); KRAJNOVIC, Tihomir, 10360 Sesvete (HR)
(74) Vertreter: Prinz & Partner mbB
(86) Internationale Anmeldenummer: PCT/EP2016/064248
(87) Internationale Veröffentlichungsnummer: WO 2016/207132

(56) Entgegenhaltungen:
- WO-A1-96/35887
- DE-A1-102010 032 920
- DE-A1-102013 223 539
- DE-U1- 20 305 680
- US-A1- 2012 311 990
- US-B1- 9 057 420

## Beschreibung

Die Erfindung betrifft eine Energieführungskette.

Eine Energieführungskette ist ein Bauteil, das im Maschinenbau verwendet wird, um flexible Netzkabel, Steuerungskabel, pneumatische oder hydraulische Leitungen vor grobem Schmutz, Abnutzung und Beschädigungen zu schützen und zu führen. Energieführungsketten kommen insbesondere dort zum Einsatz, wo bewegte Maschinenteile mit Energie, Daten, Flüssigkeiten oder Gasen versorgt werden müssen. Eine Energieführungskette bündelt die entsprechenden Kabel und Leitungen, sodass eine Zufuhr an einen zentralen Einspeisepunkt der Werkzeugmaschine, Anlage, Roboter oder dergleichen erfolgt.

Bekannte Energieführungsketten, zum Beispiel US2012/311990 und US9057420, haben oft Nachteile, die die Tauglichkeit für Anwendungen mit hohen Anforderungen in Frage stellen. Hierzu zählen beispielsweise die mangelnde Flexibilität und Beweglichkeit der Energieführungskette aufgrund der Struktur und Beschaffenheit ihrer Ummantelung und die begrenzte Montagefähigkeit, da es schwierig ist, zusammengesetzte Elemente der Energieführungskette zu lösen. Außerdem ist der Durchmesser der Energieführungskette nicht veränderbar. Weitere Nachteile sind darin zu sehen, dass Energieführungsketten ab einer gewissen Montagehöhe instabil sind und dass keine unterschiedlichen Neigungsstärken eingestellt werden können.

Die EP 1 616 376 B1 zeigt eine Energieführungskette aus gelenkig miteinander verbundenen und abwinkelbaren, stirnseitig offenen Gliedern, die in Längsrichtung der Kabelführung hintereinander angeordnet sind und mittels radial außenseitiger Führungselemente einen Führungskanal bilden. Zwischen den miteinander gelenkig verbundenen Gliedern sind zugkräfteaufnehmende Gelenkverbindungen innerhalb der Kabelführung angeordnet. Für die Zusammenfügung und Demontage werden die zu verbindenden bzw. zu lösenden Glieder bzw. Gelenkelemente in einer Richtung bewegt, die von der Längsrichtung der Energieführungskette verschieden ist. Die Gelenkelemente der Energieführungskette sind mit zu hintergreifenden Hinterschnitten in Form von hakenförmigen Bereichen versehen. Zur Trennung der Gelenkverbindungen sind an den Gelenkkörperaufnahmen Durchtrittsöffnungen vorgesehen, in die ein Werkzeug zur Demontage des Gelenkkörpers einführbar ist.

Aus der WO 2010/119104 A2 ist eine Energieführungskette mit einer Anzahl gelenkig miteinander verbundener rohrförmiger Kettenglieder bekannt, die je eine Bodenwand, daran seitlich anschließende gegenüberliegende Seitenwände und eine Deckelwand aufweisen, wobei die Deckelwand abnehmbar mit den Seitenwänden verbunden ist. Die Seitenwände weisen jeweils einen Gelenkzapfen und eine Gelenköffnung zur gelenkigen Verbindung auf. Der Verschwenkwinkel der beiden Schwenkrichtungen ist durch Anschläge begrenzt. Die Deckelwände, Seitenwände und Bodenwände benachbarter Kettenglieder überlappen sich teleskopartig über den gesamten Verschwenkwinkel. Die Oberfläche der Deckelwände, Bodenwände und der Übergangszonen dieser Wände und der Seitenwände sind in Umfangsrichtung der rohrförmigen Kettenglieder konvex gekrümmt.

In der WO 2013/124370 A2 ist eine Energieführungskette aus gelenkig miteinander verbundenen Gliedern gezeigt, die mit einem Mantelteil versehen sind, das mittels eines Steges mit einem Zentralteil verbunden ist. Das Mantelteil besteht aus wenigstens zwei Segmenten, die lösbar mit dem Zentralteil verbunden sind, sodass sie aus ihrer Betriebslage entfernt werden können, um den wenigstens einen Führungskanal umfangsseitig zugänglich zu machen.

Bei der aus der EP 1 200 753 B1 bekannten Energieführungskette bilden eine Anzahl gelenkig miteinander verbundener Kettenglieder einen Aufnahmeraum für die Kabel und Schläuche. Ein federnder Stab, der sich in Längsrichtung der Energieführungskette in deren Aufnahmeraum erstreckt und der bei Verschwenkung der Kettenglieder gegeneinander mit zunehmender Biegung Rückstellkräfte erzeugt, bewirkt eine Bewegung der Energiezuführungskette in eine gestreckte Lage. Dadurch sollen die in der Energieführungskette aufgenommenen Kabel bzw. Schläuche gegen übermäßige Knick-, Biege- und Torsionsbeanspruchung geschützt werden.

Aufgabe der Erfindung ist es, eine kostengünstig herstellbare, stabile Energieführungskette zu schaffen, die schnell und einfach montiert und flexibel an die jeweiligen Anforderungen angepasst werden kann.

Gelöst wird diese Aufgabe durch eine Energieführungskette mit den Merkmalen des Anspruchs 1. Vorteilhafte und zweckmäßige Ausgestaltungen der erfindungsgemäßen Energieführungskette sind in den Unteransprüchen angegeben.

Die erfindungsgemäße Energieführungskette umfasst mehrere in einer Längsrichtung zusammensteckbare Glieder, die relativ zueinander schwenkbar sind und zusammen einen Führungskanal zur Aufnahme wenigstens eines Kabels oder einer Leitung bilden. Gemäß der Erfindung ist zwischen zwei benachbarten Gliedern jeweils ein separates Federelement eingefügt, das die benachbarten Glieder in eine Vorzugsausrichtung vorspannt.

Die Erfindung beruht auf der Erkenntnis, dass die Stabilität der Energieführungskette durch die einzelnen Federelemente gezielt beeinflusst werden kann. Stark ausgelegte Federelemente, die sich nur unter großer Last verformen, sorgen für eine hohe Stabilität der Energieführungskette, insbesondere in Fällen, in denen die Energieführungskette einen großen Höhenunterschied überwindet. Schwach ausgelegte, leicht verformbare Federelemente erlauben starke Krümmungen der Energieführungskette, wenn abrupte Richtungswechsel gefordert sind. Je nach Bedarf kann so die Biegesteifigkeit der Energieführungskette an die jeweiligen Anforderungen angepasst werden. Da eine Vielzahl (auswechselbarer) Federelemente zwischen den einzelnen Gliedern vorgesehen ist, können durch den Einsatz unterschiedlich ausgelegter Federelemente bei Bedarf verschiedene Biegesteifigkeiten innerhalb derselben Energieführungskette erreicht werden.

Um das Potential eines erfindungsgemäß vorgesehenen Federelements im erfindungsgemäßen Sinne voll auszuschöpfen und um jegliche Klappergeräusche zu vermeiden, ist eine Konfiguration vorteilhaft, bei der das Federelement im zusammengesteckten Zustand der benachbarten Glieder gestaucht ist.

Gemäß der Erfindung ist das Federelement jeweils auf ein Mittelstück der benachbarten Glieder aufgeschoben. Diese zentrale Anordnung des Federelements sorgt dafür, dass die Kraftverhältnisse (Rückstellkräfte) für jede Neigungsrichtung gleich sind. Bei der Verlegung der Energieführungskette muss also nicht auf eine bestimmte Orientierung geachtet werden, da die Energieführungskette unter gleichen Bedingungen in jede Richtung gekrümmt werden kann.

Die Erfindung sieht vor, dass sich das Federelement an seinen axialen Enden jeweils an Rastverbindungsabschnitten der benachbarten Glieder abstützt, mit denen jeweils ein Außenteil des jeweiligen Glieds am zugehörigen Mittelstück angebracht ist. Die Rastverbindungsabschnitte erfüllen somit eine Doppelfunktion: zum einen dienen sie zur Anbringung der Außenteile, die die Kabel bzw. Leitungen schützen, zum anderen dienen sie gleichzeitig als Auflagefläche für die Federelemente. Zusätzliche bauliche Vorkehrungen zum Abstützen der Federelemente sind dementsprechend nicht erforderlich.

Die einzelnen Glieder der erfindungsgemäßen Energieführungskette sollen leicht und unkompliziert zusammengesteckt werden können. In dieser Hinsicht ist vorgesehen, dass das Mittelstück einen sich in der Längsrichtung erstreckenden Grundkörper mit einem Hohlraum aufweist, der über eine stirnseitige Einstecköffnung zugänglich ist. Im Hohlraum bildet ein die Einstecköffnung umgebender Rand eine Haltefläche. Die Haltefläche dient dazu, einen Steckfortsatz eines benachbarten Glieds festzuhalten, wie nachfolgend noch genauer erläutert wird.

Vorzugsweise erstrecken sich auf der von der Einstecköffnung entgegengesetzten Seite des Grundkörpers zwei Steckfortsätze, die in einer zur Längsrichtung im Wesentlichen senkrechten Richtung voneinander beabstandet und in dieser Richtung elastisch auslenkbar sind. Diese Steckfortsätze können in die Einstecköffnung des benachbarten Glieds eingeführt werden, um die Glieder aneinander zu halten. Dazu weisen die Steckfortsätze jeweils einen runden Halteabschnitt mit einer vorzugsweise konvex gekrümmten Gegenhaltefläche auf, die im zusammengesteckten Zustand der Glieder mit der Haltefläche des benachbarten Glieds zusammenwirken. Durch die besondere Form der Halteabschnitte ist sichergestellt, dass die Glieder zwar aneinander gehalten werden, dass aber dank der konvexen Krümmung gleichzeitig eine Neigung der Glieder relativ zueinander möglich ist.

Um das Einführen der Steckfortsätze in die Einstecköffnung zu erleichtern, ist es zweckmäßig, dass die Gesamtbreite der Halteabschnitte des Mittelstücks eines Glieds mit zunehmendem Abstand von dessen Grundkörper abnimmt.

Ein besonders vorteilhafter Aspekt der Erfindung betrifft die Demontage der einzelnen Glieder. Für eine schnelle und einfache Demontage weist der Grundkörper miteinander fluchtende Demontageöffnungen auf, die einen Zugang zum Hohlraum des Grundkörpers schaffen, in dem sich die beiden auslenkbaren Steckfortsäte des benachbarten Glieds befinden. Vorzugsweise verläuft die Fluchtlinie der Demontageöffnungen parallel zur Auslenkungsrichtung dieser beiden Steckfortsätze. So ist es möglich, mit einem speziellen Werkzeug oder mit sonstigen Hilfsmitteln die Steckfortsätze zusammenzudrücken, sodass sie durch die Einstecköffnung aus dem Hohlraum herausgezogen werden können und die Verbindung der benachbarten Glieder aufgehoben ist.

Um eine solche Demontage der Glieder jederzeit zu ermöglichen, sind die Außenteile eines Glieds so geformt, dass zwischen den Außenteilen einander gegenüberliegende Spalte verbleiben. Die Spalte schaffen einen dauerhaften Zugang zu den Demontageöffnungen, sodass keine weiteren Maßnahmen notwendig sind, um das Werkzeug oder die Hilfsmittel anzusetzen.

Als separates Werkzeug für die Demontage der Glieder eignet sich insbesondere ein triangelförmig gebogener Draht mit einem unterbrochenen Schenkel. Die so gebildeten freien Drahtenden des Werkzeugs sind elastisch auslenkbar und können in die Demontageöffnungen eingeführt werden. Durch Zusammendrücken der freien Enden werden dann die Steckfortsätze so ausgelenkt, dass die benachbarten Glieder voneinander getrennt werden können.

Zur Anbringung der Außenteile sind die zuvor erwähnten Rastverbindungsabschnitte vorgesehen, auf denen sich das Federelement abstützt. Die Rastverbindungsabschnitte weisen gemäß einer bevorzugten Ausführungsform jeweils auf einer vom Grundkörper abgewandten Stirnseite eine Aufnahmeöffnung auf, durch die Rasthaken eines Außenteils einführbar sind. Die Rasthaken können wiederum in Rastöffnungen des jeweiligen Rastverbindungsabschnitts einrasten. (Selbstverständlich soll damit auch die Umkehrung dieses Prinzips umfasst sein, wenn also der Rastverbindungsabschnitt am Außenteil und die Rasthaken am Mittelstück gebildet sind.) Dieser modulare Aufbau der einzelnen Glieder erlaubt den Einsatz unterschiedlicher Außenteile, solange diese einen zu den Rastverbindungsabschnitten der Mittelstücke kompatiblen Gegenrastverbindungsabschnitt aufweisen. Insbesondere der Durchmesser des Führungskanals, der durch die Abmessungen und Form der Außenteile, insbesondere durch die radiale Länge der Rastverbindungsabschnitte bestimmt ist, kann so je nach Bedarf gewählt werden. So empfiehlt sich beispielsweise ein größerer Außendurchmesser, wenn mehrere oder dicke Kabel/Leitungen verlegt werden sollen.

Bevorzugt weisen die Außenteile jeweils einen ersten Mantelabschnitt und einen in axialer Richtung angrenzenden zweiten Mantelabschnitt mit einem kleineren Außendurchmesser auf, sodass zwischen den beiden Mantelabschnitten ein Absatz gebildet ist. Diese Gestaltung ermöglicht einen teleskopartigen Aufbau, bei dem sich die Mantelteile benachbarter Glieder überlappen.

Die relative Neigung benachbarter Glieder wird dadurch erleichtert, dass der zweite Mantelabschnitt eine konvex geformte Außenfläche aufweist, an der der erste Mantelabschnitt des benachbarten Glieds entlang gleiten kann.

Gemäß einer bevorzugten Ausführungsform der erfindungsgemäßen Energieführungskette ist ein Glied relativ zu einem benachbarten Glied ausgehend von der durch die Federelement bestimmten Vorzugsausrichtung in eine beliebige Richtung neigbar, wobei der Absatz des benachbarten Glieds einen Anschlag bildet, der den Neigungsbereich begrenzt. Die gezielte Begrenzung des Neigungsbereichs mithilfe des Absatzes ist sinnvoll, um ein übermäßiges Krümmen oder gar Abknicken der Energieführungskette zu verhindern, was die innenliegenden Kabel bzw. Leitungen beschädigen könnte. Außerdem kann durch die Neigungsbegrenzung erreicht werden, dass bei jeder Neigung eine Überlappung der Mantelteile benachbarter Glieder gewährleistet ist. Dadurch werden unerwünschte axiale Lücken zwischen den Gliedern vermieden.

Zur Befestigung der Energieführungskette, insbesondere an der zu versorgenden Maschine, Anlage, Roboter oder dergleichen, soll wenigstens ein Endstück mit einem Mittelstück dienen, das fest mit einem Rahmen verbunden ist und auf einer axialen Stirnseite Steckfortsätze oder eine Einstecköffnung aufweist, wobei das Mittelstück auf der entgegengesetzten axialen Stirnseite plan ist und auf dieser Seite mit dem Rahmen eine Montageebene bildet. Das bedeutet, dass das Mittelstück des Endstücks auf einer axialen Seite den gleichen Aufbau wie ein Mittelstück eines "normalen" Glieds der Energieführungskette hat und somit ein Zusammenstecken eines letzten Glieds der Energieführungskette mit dem Endstück nach dem gleichen Prinzip erfolgen kann wie bei zwei benachbarten "normalen" Gliedern. Auf der anderen axialen Seite des Endstücks ermöglicht die flache Montageebene ohne vorstehende Teile eine einfache Befestigung.

Im Hinblick auf die bevorzugte Steckverbindung mit einem letzten Glied der Energieführungskette ist eine Gestaltung des Endstücks vorteilhaft, bei der Mantelabschnitte mit dem Rahmen des Endstücks verbunden sind, die im Wesentlichen identisch zu den ersten oder zweiten Mantelabschnitten der Glieder ausgebildet sind. Somit ist eine Abschirmung der Leitungen durch die mit den jeweils anderen Mantelabschnitten des letzten Glieds zusammenwirkenden Mantelabschnitte des Endstücks bis zum Einspeisepunkt sichergestellt.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht einer erfindungsgemäßen Energieführungskette;
- Figur 2 den schematischen Aufbau der Glieder der erfindungsgemäßen Energieführungskette;
- Figur 3 das Zusammenstecken der Glieder;
- Figur 4 eine Schnittansicht der Energieführungskette mit eingelegten Kabeln;
- Figur 5 die maximale Neigung der Glieder in zwei zueinander senkrechten Richtungen;
- Figur 6 das Öffnen eines Glieds mit einem Werkzeug;
- Figur 7 die Montage eines ersten Endstücks der erfindungsgemäßen Energieführungskette; und
- Figur 8 die Montage eines zweiten Endstücks der erfindungsgemäßen Energieführungskette.

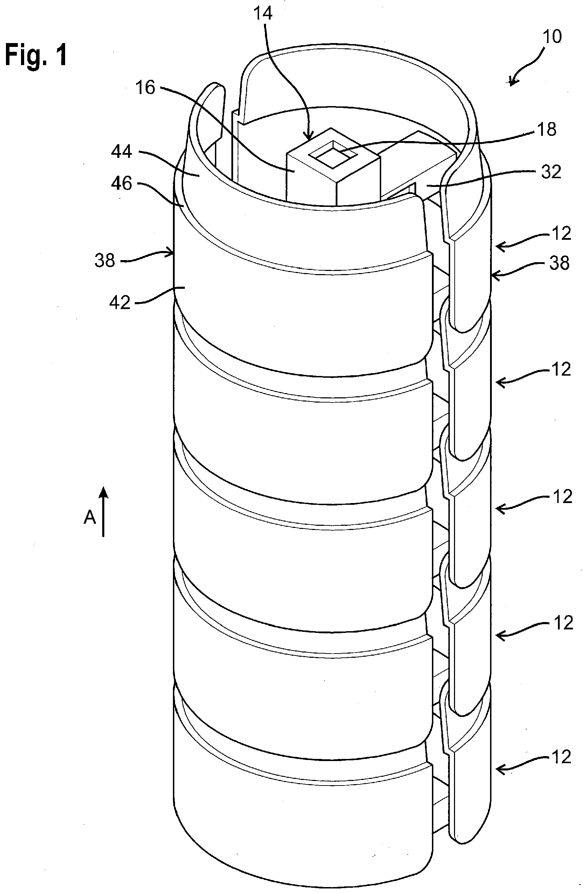

In Figur 1 ist eine Energieführungskette 10 im zusammengebauten, ungekrümmten Zustand ohne Endstücke dargestellt. Die Energieführungskette 10 ist modular aufgebaut, d. h. sie umfasst eine Vielzahl einzelner Glieder 12, von denen je nach gewünschter Länge eine entsprechende Anzahl zusammengesteckt werden. Der Aufbau der einzelnen Glieder 12 und das Zusammenstecken der Glieder 12 zu einer Kette werden nachfolgend im Detail beschrieben.

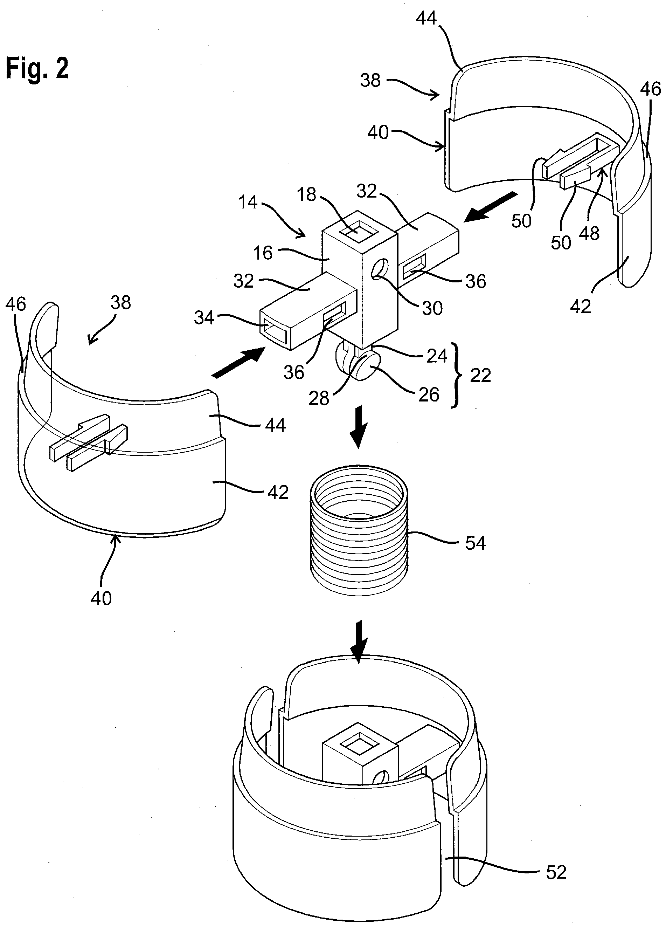

Figur 2 zeigt die wesentlichen Bestandteile eines Glieds 12 der Energieführungskette 10 und das Prinzip des Zusammenbaus.

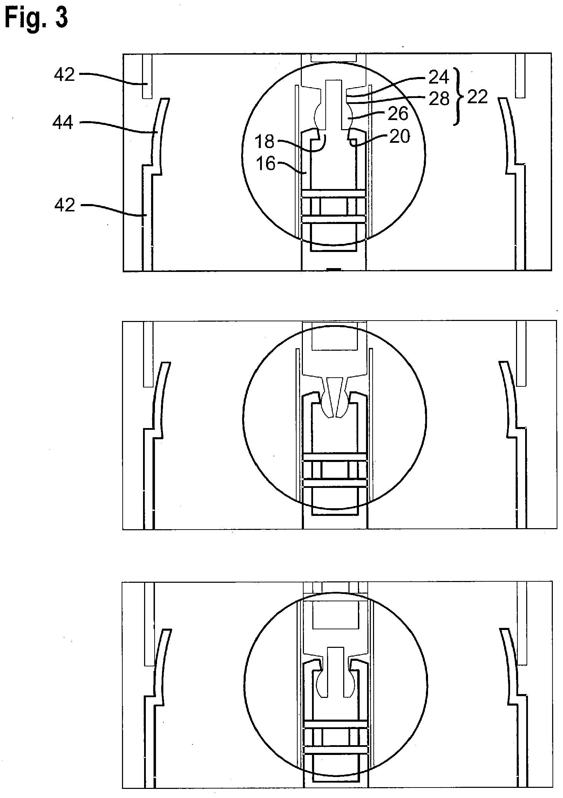

Ein Mittelstück 14 weist einen Grundkörper 16 auf, der im dargestellten Ausführungsbeispiel quaderförmig ist. Der Grundkörper 16 ist innen im Wesentlichen hohl. Auf einer ersten Seite des Grundkörpers 16 ist eine Einstecköffnung 18 vorgesehen, die in den Hohlraum des Mittelstücks 14 mündet. Die Abmessungen der Einstecköffnung 18 und des Hohlraums sind so bemessen, dass innenseitig ein die Einstecköffnung 18 umgebender Rand gebildet ist, der als Haltefläche 20 dient (siehe Figur 3), wie später noch erläutert wird.

Die erste Seite und eine der ersten Seite entgegengesetzte zweite Seite des Grundkörpers 16 definieren eine Längsrichtung A der Energieführungskette 10.

Von der zweiten Seite des Grundkörpers 16 erstrecken sich zwei Steckfortsätze 22. Die Steckfortsätze 22 sind in einer zur Längsrichtung A senkrechten Richtung voneinander beabstandet und in dieser Richtung elastisch auslenkbar. Die Steckfortsätze 22 weisen jeweils einen quaderförmigen Verbindungsabschnitt 24 und einen runden Halteabschnitt 26 auf, der in Auslenkungsrichtung vom Verbindungsabschnitt 24 nach außen vorsteht, sodass eine Gegenhaltefläche 28 gebildet ist. Der Halteabschnitt 26 hat eine im Wesentlichen plankonvexe Form oder die Form einer Scheibe, sodass die Gegenhaltefläche 28 konvex gekrümmt ist. Die Halteabschnitte 26 können so geneigt sein, oder die Abmessungen der Halteabschnitte 26 können sich in Längsrichtung A so verjüngen, dass die Gesamtbreite der beiden Halteabschnitte 26 in Auslenkungsrichtung mit zunehmendem Abstand vom Grundkörper 16 abnimmt.

Auf einer dritten Seite und einer der dritten Seite entgegengesetzten vierten Seite des Grundkörpers 16 sind miteinander fluchtende Demontageöffnungen 30 gebildet, die jeweils einen Zugang zum Hohlraum des Grundkörpers 16 schaffen. Die Fluchtlinie der beiden Demontageöffnungen 30 verläuft parallel zur Auslenkungsrichtung der beiden Steckfortsätze 22.

Von einer fünften Seite und einer der fünften Seite entgegengesetzten sechsten Seite des Grundkörpers 16 erstreckt sich jeweils ein Rastverbindungsabschnitt 32. Der Rastverbindungsabschnitt 32 hat auf der vom Grundkörper 16 abgewandten Stirnseite eine Aufnahmeöffnung 34, die in einen Hohlraum mündet. Auf zwei entgegengesetzten Seiten des Rastverbindungsabschnitts 32 sind in den entsprechenden Wandungen, die den Hohlraum des Rastverbindungsabschnitts 32 umgeben, zwei Rastöffnungen 36 gebildet.

Zu jedem Glied 12 der Energieführungskette 10 gehören zwei identisch geformte Außenteile 38. Die Außenteile 38 sind im Wesentlichen als hohle Teilkreiszylinder ohne Grund bzw. Deckflächen geformt mit einem Mantelteil 40, der sich über einen Mittelpunktswinkel von etwas weniger als 180° erstreckt. In axialer Richtung kann der Mantelteil 40 in zwei Mantelabschnitte 42, 44 unterteilt werden. Der erste Mantelabschnitt 42 hat im Vergleich zum zweiten Mantelabschnitt 44 bei vergleichbarer Wandstärke einen etwas größeren Außendurchmesser. Im Übergangsbereich zwischen den beiden Mantelabschnitten 42, 44 ist deshalb ein Absatz 46 gebildet, der außenseitig eine Auflagefläche definiert. Wie insbesondere in den Schnittdarstellungen der Figur 3 zu erkennen ist, ist der zweite Mantelabschnitt 44 gekrümmt, sodass seine Außenfläche konvex ist.

Zu einem Außenteil 38 gehört neben dem Mantelteil 40 noch ein Gegenrastverbindungsabschnitt 48, der sich von einem der Mantelabschnitte 42, 44, hier von dem ersten Mantelabschnitt 42, radial nach innen erstreckt. Der Gegenrastverbindungsabschnitt 48 ist auf den Rastverbindungsabschnitt 32 des Mittelstücks 14 abgestimmt und weist beim dargestellten Ausführungsbeispiel zwei in einer radialen Ebene angeordnete, einander gegenüberliegende Rasthaken 50 auf, die in der radialen Ebene elastisch auslenkbar sind.

Wie in Figur 2 dargestellt werden die Außenteile 38 am Mittelstück 14 befestigt, indem die Rasthaken 50 eines Außenteils 38 in die Aufnahmeöffnung 34 des Mittelstücks 14 geschoben werden. Dabei werden die Rasthaken 50 zusammengedrückt, bis sie die Rastöffnungen 36 erreichen und sich wieder auseinanderbewegen können. Die auf diese Weise eingehakten Außenteile 38 lassen sich nicht mehr ohne Weiteres vom Mittelstück 14 abziehen.

Da sich die Mantelabschnitte 42, 44 der Außenteile 38 nur über einen Mittelpunktswinkel von weniger als 180° erstrecken, verbleiben nach dem Aufstecken der Außenteile 38 zwei gegenüberliegende Spalte 52. Die Spalte 52 sollten nur so groß sein, dass die zu verlegenden Kabel bzw. Leitungen, soweit sie nicht durch zusätzliche Maßnahmen wie Kabelbinder oder dergleichen gesichert sind, nicht ohne Weiteres durch die Spalte 52 herausrutschen können.

Zwischen zwei Glieder 12 der Energieführungskette 10 wird ein Federelement 54 in Form einer Schraubenfeder eingefügt. Das Federelement 54 hat einen Durchmesser, der größer als der maximale Durchmesser des Mittelstück-Grundkörpers 16 quer zur Längsrichtung A ist, aber kleiner als die Entfernung zwischen den freien Enden der Rastverbindungsabschnitte 32. Wie in Figur 2 angedeutet, wird das Federelement 54 vor dem Zusammenstecken so auf den Grundkörper 16 des Mittelstücks 14 eines Glieds 12 aufgeschoben, dass es auf den beiden Rastverbindungsabschnitten 32 des Mittelstücks 14 aufliegt.

Das Zusammenstecken zweier Glieder 12 der Energieführungskette 10 ist in den Schnittdarstellungen der Figur 3 verdeutlicht. Die Steckfortsätze 22 eines Glieds 12 werden in die Einstecköffnung 18 eines anderen Glieds 12 eingeführt. Dabei werden die beiden Steckfortsätze 22 vom außenseitigen Rand der Einstecköffnung 18 in Auslenkungsrichtung zusammengedrückt, bis die beiden Halteabschnitte 26 die Einstecköffnung 18 passiert haben und auseinanderschnappen. Nach diesem Prinzip werden so viele Glieder 12 zusammengesteckt, bis die Energieführungskette 10 die gewünschte Länge erreicht hat.

Die zusammengesteckten Glieder 12 lassen sich nicht mehr ohne Weiteres voneinander trennen. Wirkt eine Zugkraft auf ein Glied 12 entgegen der Einführrichtung, so kommen die Gegenhalteflächen 28 der Halteabschnitte 26 an der Haltefläche 20 des Mittelstücks 14 des anderen Glieds 12 zur Anlage und verhindern ein Abziehen des Glieds 12.

Die axiale Länge der Federelemente 54 ist so bemessen, dass sie nach dem Zusammenstecken der Glieder 12 gestaucht sind, d. h. dass sie sich an ihren beiden axialen Enden an den Rastverbindungsabschnitten 32 der zusammengesteckten Mittelstücke 14 abstützen.

Beim Zusammenstecken behindern sich die Mantelabschnitte 42, 44 der Außenteile 38 nicht, da der erste Mantelabschnitt 42 des einen Glieds 12 problemlos über den zweiten Mantelabschnitt 44 des anderen Glieds 12 geschoben werden kann, dessen Außendurchmesser zumindest an seinem freien Ende kleiner als der Innendurchmesser des ersten Mantelabschnitts 42 ist. Wenn die beiden Glieder 12 wie in der unteren Darstellung der Figur 3 genau übereinander stehen, verbleibt ein Abstand zwischen dem freien Ende des ersten Mantelabschnitts 42 des einen Glieds 12 und dem Absatz 46 zwischen den beiden Mantelabschnitten 42, 44 des anderen Glieds 12.

Beim Zusammenzustecken der Glieder 12 müssen die Außenteile 38 aber (noch) nicht an den Mittelstücken 14 angebracht sein. Insbesondere kann jeweils eines der beiden Außenteile 38 erst später angesteckt werden, wenn die Kabel und/oder Leitungen im Inneren der Energieführungskette 10 verlegt sind.

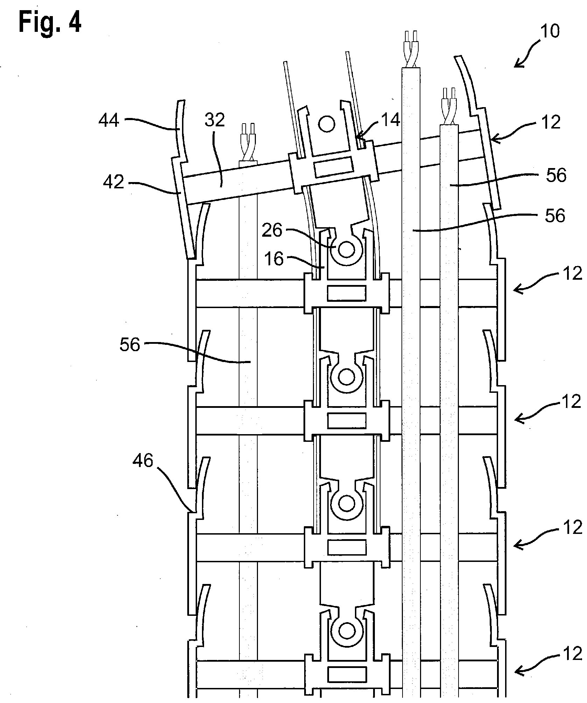

Figur 4 zeigt beispielhaft einen Ausschnitt einer Energieführungskette 10, in der mehrere Kabel 56 aufgenommen sind. Wie bereits erwähnt, können die im Inneren der Energieführungskette 10 verlaufenden Kabel und/oder Leitungen noch zusätzlich gesichert werden, wie etwa durch Kabelbinder oder dergleichen, die am Grundkörper 16 oder an den Rastverbindungsabschnitten 32 der Mittelstücke 14 befestigt werden.

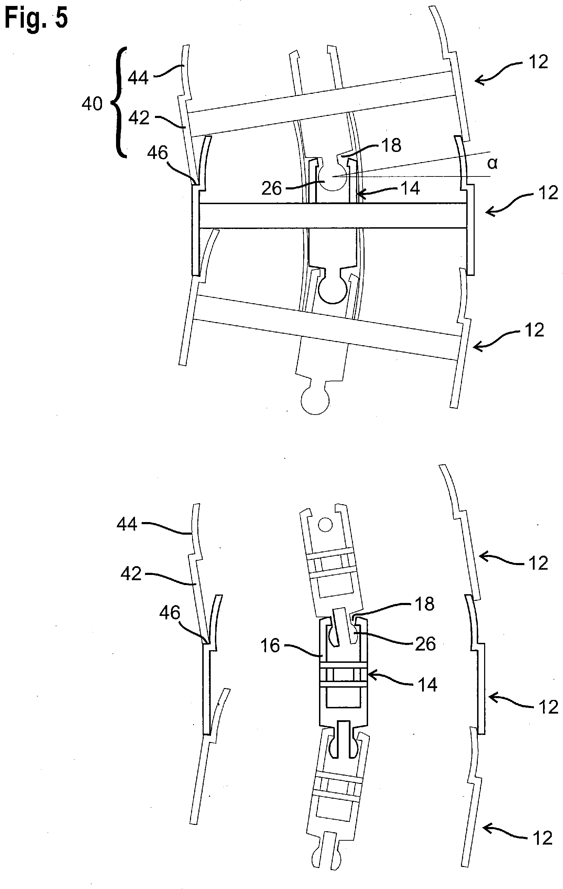

Die beiden Darstellungen der Figur 5 zeigen die maximal möglichen Neigungen der Glieder 12 der Energieführungskette 10 in zwei zueinander senkrechten Schnittansichten. Jedes Glied 12 kann so weit in eine beliebige Richtung geneigt werden, bis es mit dem freien Ende des ersten Mantelabschnitts 42 auf dem Absatz 46 des Mantelteils 40 des benachbarten Glieds 12 aufliegt oder umgekehrt.

Die maximale Neigung ist bei der in den Figuren gezeigten Ausführungsform der Energieführungskette 10 ausgehend von einer gemeinsamen geraden Längsrichtung A der Energieführungskette 10 für alle Glieder 12 gleich. Insbesondere die Halteabschnitte 26, die Einstecköffnungen 18 und die Hohlräume der Mittelstücke 14 sind so geformt und bemessen, dass diese maximalen Neigungen der Glieder 12 in alle Richtungen voll ausgeschöpft werden können. Die maximale Neigung der Glieder 12 relativ zu seinen benachbarten Gliedern 12 kann gemäß der oberen Darstellung der Figur 5 durch einen Winkel α angegeben werden. Beim dargestellten Ausführungsbeispiel beträgt dieser Winkel etwa 9°. Der maximale Neigungswinkel bestimmt zusammen mit der axialen Länge der Glieder 12 maßgeblich den kleinstmöglichen Biegeradius der Energieführungskette 10.

Auch bei maximaler Neigung ist immer gewährleistet, dass sich die Mantelabschnitte 42, 44 benachbarter Glieder 12 überlappen, sodass zwischen den freien Enden der ersten und zweiten Mantelabschnitte 42, 44 der benachbarten Glieder 12 keine Zwischenräum entstehen. Dadurch ist gewährleistet, dass kein grober Schmutz in das Innere der Energieführungskette 10 eindringen kann und keine Kabel bzw. Leitungen zwischen zwei Gliedern 12 eingeklemmt werden können.

Die Neigung der Glieder 12 erfolgt gegen den Widerstand der Federelemente 54, die Rückstellkräfte auf die Glieder 12 ausüben. Genauer gesagt sind die Rückstellkräfte immer so gerichtet, dass die Glieder 12 bestrebt sind, die in Figur 1 gezeigte Lage einzunehmen, in der sie alle in einer geraden Längsrichtung A der Energieführungskette 10 ausgerichtet sind. Diese Ausrichtung der Glieder kann dementsprechend als Vorzugsausrichtung bezeichnet werden. Grundsätzlich ist es durch eine andere Formgebung der Mittelstücke 14 und/oder der Federelemente 54 möglich, auch eine nicht-lineare Vorzugsausrichtung vorzugeben.

Die Rückstellkräfte sind durch die Auslegung der gewählten Federelemente 54 bestimmt. Je nach Bedarf können in bestimmten Bereichen der Energieführungskette 10 unterschiedlich ausgelegte Federelemente 54 eingesetzt werden. So kann es z. B. zweckmäßig sein, in Bereichen der Energieführungskette 10, die stark gekrümmt werden, schwächer ausgelegte Federelemente 54 zu verwenden als in Bereichen, die im Wesentlichen gerade oder mit geringerer Krümmung verlaufen sollen.

Zur festen Anbindung der Energieführungskette 10 sind ein erstes und ein zweites Endstück 58, 60 vorgesehen, die speziell für jeweils ein Ende der Energieführungskette 10 konzipiert sind.

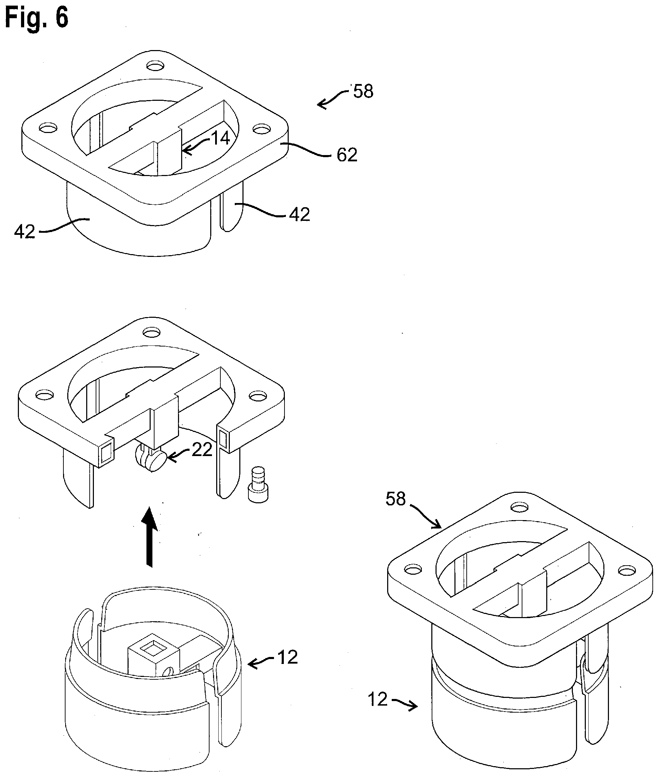

Das in Figur 6 gezeigte erste Endstück 58 weist ein Mittelstück 14 auf, das ebenso wie die einzelnen Glieder 12 über zwei Steckfortsätze 22 verfügt. Auf der entgegengesetzten Seite ist das Mittelstück 14 jedoch plan. Das Mittelstück 14 ist fest mit einem Rahmen 62 verbunden und bildet auf seiner planen Seite eine Montageebene mit dem Rahmen 62. Ebenfalls fest mit dem Rahmen 62 sind auch zwei Mantelabschnitte 42 verbunden, die wie die ersten Mantelabschnitte 42 der Glieder 12 ausgebildet und angeordnet sind. Mithilfe von Schrauben oder anderen geeigneten Befestigungsmitteln wird der Rahmen 62 an der vorgesehenen Anbindungsstelle befestigt. Das erste Endstück 58 eignet sich zur festen Anbindung desjenigen Endes der Energieführungskette 10, bei dem das äußerste Glied 12 eine freie Einstecköffnung 18 aufweist. Die Energieführungskette 10 kann mit diesem äußersten Glied 12 einfach in der zuvor erläuterten Art und Weise auf das erste Endstück 58 aufgesteckt werden, wie in Figur 6 gezeigt.

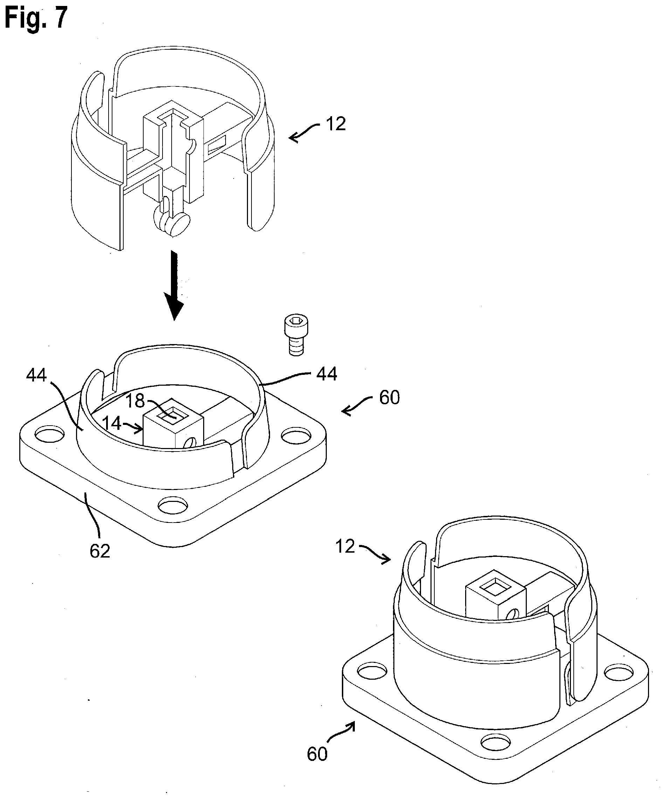

Das in Figur 7 gezeigte zweite Endstück 60 weist ein Mittelstück 14 auf, das ebenso wie die einzelnen Glieder 12 über eine Einstecköffnung 18 verfügt. Auf der entgegengesetzten Seite ist das Mittelstück 14 jedoch plan. Das Mittelstück 14 ist fest mit einem Rahmen 62 verbunden und bildet auf seiner planen Seite eine Montageebene mit dem Rahmen 62. Ebenfalls fest mit dem Rahmen 62 sind auch zwei Mantelabschnitte 44 verbunden, die wie die zweiten Mantelabschnitte 44 der Glieder 12 ausgebildet und angeordnet sind. Mithilfe von Schrauben oder anderen geeigneten Befestigungsmitteln wird der Rahmen 62 an der vorgesehenen Anbindungsstelle befestigt. Das zweite Endstück 60 eignet sich zur festen Anbindung desjenigen Endes der Energieführungskette 10, bei dem das äußerste Glied 12 freie Steckfortsätze 22 aufweist. Die Energieführungskette 10 kann mit diesem äußersten Glied 12 einfach in der zuvor erläuterten Art und Weise auf das zweite Endstück 60 aufgesteckt werden, wie in Figur 7 gezeigt.

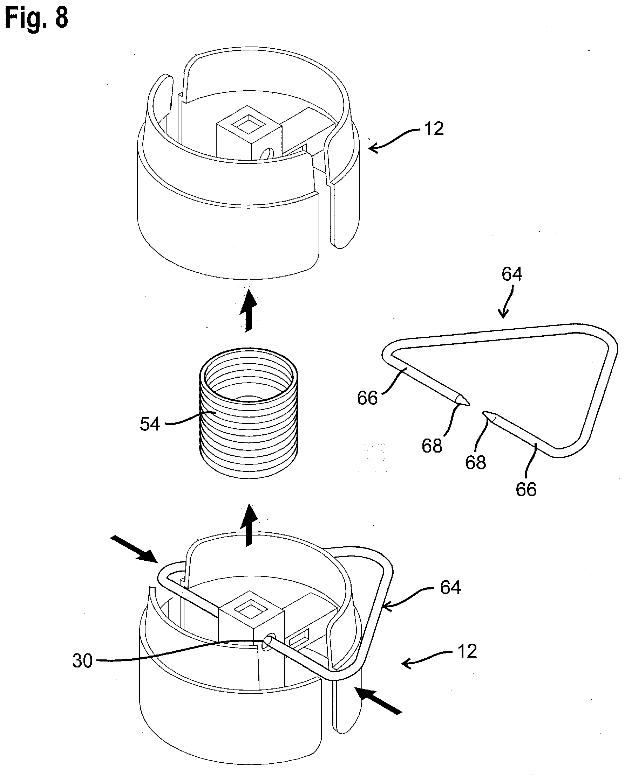

Figur 8 zeigt das Prinzip der Demontage der Energieführungskette 10, genauer gesagt die Trennung benachbarter Glieder 12. Hierfür wird ein Werkzeug 64 benötigt, das z. B. als triangelförmig gebogener Draht ausgebildet sein kann, bei dem ein Schenkel 66 unterbrochen ist. Die beiden freien Drahtenden 68 des Werkzeugs 64 werden in die beiden Demontageöffnungen 30 eines Mittelstücks 14 gesteckt. Hierfür ist es gegebenenfalls erforderlich, die beiden Enden 68 etwas auseinander zu dehnen. Außerdem muss das Federelement 54 vorher in eine axiale Richtung komprimiert werden, um einen Zugang zu den Demontageöffnungen 30 zu schaffen, oder die Drahtenden werden zwischen den Windungen des Federelements 54 hindurch gesteckt.

Die beiden freien Enden 68 des Werkzeugs 64 werden nun zusammengedrückt, wie durch die Pfeile in Figur 8 symbolisiert. Die Demontageöffnungen 30 sind so angeordnet, dass die freien Enden 68 auf die Halteabschnitte 26 des benachbarten Mittelstücks 14 treffen und diese zusammendrücken, sodass die Halteabschnitte 26 durch die Einstecköffnung 18 passen und das benachbarte Glied 12 axial abgezogen werden kann.

Anstelle des in Figur 8 gezeigten speziell geformten Werkzeugs 64 können auch zwei Stifte oder dergleichen verwendet werden, die gleichzeitig in die Demontageöffnungen 30 gesteckt werden.

Die Außenteile 38 der Glieder 12 lassen sich einfach abziehen, indem die in oder aus den Rastöffnungen 36 ragenden Rasthaken 50 zusammengedrückt werden. Gegebenenfalls kann auch hierfür ein Werkzeug zu Hilfe genommen werden.

### Bezugszeichenliste

- 10: Energieführungskette
- 12: Glied
- 14: Mittelstück
- 16: Grundkörper
- 18: Einstecköffnung
- 20: Haltefläche
- 22: Steckfortsatz
- 24: Verbindungsabschnitt
- 26: Halteabschnitt
- 28: Gegenhaltefläche
- 30: Demontageöffnung
- 32: Rastverbindungsabschnitt
- 34: Aufnahmeöffnung
- 36: Rastöffnung
- 38: Außenteil
- 40: Mantelteil
- 42: erster Mantelabschnitt
- 44: zweiter Mantelabschnitt
- 46: Absatz
- 48: Gegenrastverbindungsabschnitt
- 50: Rasthaken
- 52: Spalt
- 54: Federelement
- 56: Kabel
- 58: erstes Endstück
- 60: zweites Endstück
- 62: Rahmen
- 64: Werkzeug
- 66: Schenkel
- 68: freies Ende des Werkzeugs

## Patentansprüche

1. Energieführungskette (10), mit mehreren in einer Längsrichtung A zusammensteckbaren Gliedern (12), die relativ zueinander schwenkbar sind und zusammen einen Führungskanal zur Aufnahme wenigstens eines Kabels (56) oder einer Leitung bilden,
wobei zwischen zwei benachbarten Gliedern (12) jeweils ein separates Federelement (54) eingefügt ist, das die benachbarten Glieder (12) in eine Vorzugsausrichtung vorspannt, und
das Federelement (54) jeweils auf ein Mittelstück (14) der benachbarten Glieder (12) aufgeschoben ist,
**dadurch gekennzeichnet, dass** sich das Federelement (54) an seinen axialen Enden jeweils an Rastverbindungsabschnitten (32) der benachbarten Glieder (12) abstützt, mit denen jeweils ein Außenteil (38) des jeweiligen Glieds (12) am zugehörigen Mittelstück (14) angebracht ist.

2. Energieführungskette (10) nach Anspruch 1, **dadurch gekennzeichnet, dass** das Federelement (54) im zusammengesteckten Zustand der benachbarten Glieder (12) gestaucht ist.

3. Energieführungskette (10) nach einem der vorhergehenden Ansprüche, **dadurch gekennzeichnet, dass** das Mittelstück (14) einen sich in der Längsrichtung A erstreckenden Grundkörper (16) mit einem Hohlraum aufweist, der über eine stirnseitige Einstecköffnung (18) zugänglich ist, wobei im Hohlraum ein die Einstecköffnung (18) umgebender Rand eine Haltefläche (20) bildet.

4. Energieführungskette (10) nach Anspruch 3, **dadurch gekennzeichnet, dass** sich auf der von der Einstecköffnung (18) entgegengesetzten Seite des Grundkörpers (16) zwei Steckfortsätze (22) erstrecken, die in einer zur Längsrichtung A im Wesentlichen senkrechten Richtung voneinander beabstandet und in dieser Richtung elastisch auslenkbar sind, wobei die Steckfortsätze (22) jeweils einen runden Halteabschnitt (26) mit einer vorzugsweise konvex gekrümmten Gegenhaltefläche (28) aufweisen, die im zusammengesteckten Zustand der Glieder (12) mit der Haltefläche (20) eines benachbarten Glieds zusammenwirken.

5. Energieführungskette (10) nach Anspruch 4, **dadurch gekennzeichnet, dass** die Gesamtbreite der Halteabschnitte (26) des Mittelstücks (14) eines Glieds (12) mit zunehmendem Abstand von dessen Grundkörper (16) abnimmt.

6. Energieführungskette (10) nach einem der Ansprüche 3 bis 5, **dadurch gekennzeichnet, dass** der Grundkörper (16) miteinander fluchtende Demontageöffnungen (30) aufweist, die einen Zugang zum Hohlraum des Grundkörpers (16) schaffen, wobei vorzugsweise die Fluchtlinie der Demontageöffnungen (30) parallel zur Auslenkungsrichtung der beiden im Hohlraum befindlichen Steckfortsätze (22) verläuft.

7. Energieführungskette (10) nach einem der vorhergehenden Ansprüche, **dadurch gekennzeichnet, dass** die Außenteile (38) eines Glieds (32) so geformt sind, dass zwischen den Außenteilen (38) einander gegenüberliegende Spalte (52) verbleiben, die einen Zugang zu den Demontageöffnungen (30) schaffen.

8. Energieführungskette (10) nach Anspruch 6 oder 7, **gekennzeichnet durch** ein separates Werkzeug (64), das als triangelförmig gebogener Draht mit einem unterbrochenen Schenkel (66) ausgebildet ist, wobei die freien Drahtenden (68) des Werkzeugs (64) elastisch auslenkbar und in die Demontageöffnungen (30) einführbar sind.

9. Energieführungskette (10) nach einem der vorhergehenden Ansprüche, **dadurch gekennzeichnet, dass** die Rastverbindungsabschnitte (32) jeweils auf einer vom Grundkörper (16) abgewandten Stirnseite eine Aufnahmeöffnung (34) aufweisen, durch die Rasthaken (50) eines Außenteils (38) einführbar sind, die in Rastöffnungen (36) des jeweiligen Rastverbindungsabschnitts (32) einrasten können.

10. Energieführungskette (10) nach einem der vorhergehenden Ansprüche, **dadurch gekennzeichnet, dass** die Außenteile (38) jeweils einen ersten Mantelabschnitt (42) und einen in axialer Richtung angrenzenden zweiten Mantelabschnitt (44) mit einem kleineren Außendurchmesser aufweisen, sodass zwischen den beiden Mantelabschnitten (42, 44) ein Absatz (46) gebildet ist.

11. Energieführungskette (10) nach Anspruch 10, **dadurch gekennzeichnet, dass** der zweite Mantelabschnitt (44) eine konvex geformte Außenfläche aufweist.

12. Energieführungskette (10) nach Anspruch 10 oder 11, **dadurch gekennzeichnet, dass** ein Glied (12) relativ zu einem benachbarten Glied (12) ausgehend von der Vorzugsausrichtung in eine beliebige Richtung neigbar ist, wobei der Absatz (46) des benachbarten Glieds (12) einen Anschlag bildet, der den Neigungsbereich begrenzt.

13. Energieführungskette (10) nach einem der vorhergehenden Ansprüche, **gekennzeichnet durch** wenigstens ein Endstück (58; 60) mit einem Mittelstück (14), das fest mit einem Rahmen (62) verbunden ist und auf einer axialen Stirnseite Steckfortsätze (22) oder eine Einstecköffnung (18) aufweist, wobei das Mittelstück (14) auf der entgegengesetzten axialen Stirnseite plan ist und auf dieser Seite mit dem Rahmen (62) eine Montageebene bildet.

14. Energieführungskette (10) nach Anspruch 10 und Anspruch 13, **dadurch gekennzeichnet, dass** Mantelabschnitte (42; 44) mit dem Rahmen (62) verbunden sind, die im Wesentlichen identisch zu den ersten oder zweiten Mantelabschnitten (42 bzw. 44) der Glieder (12) ausgebildet sind.

## Claims

1. A drag chain (10), comprising a plurality of links (12) which are adapted to be fitted together in a longitudinal direction A and which are adapted to swivel in relation to each other and together form a guide channel for accommodating at least one cable (56) or one line,
a separate spring element (54) being inserted between each pair of adjacent links (12) which pretensions the adjacent links (12) to a preferential orientation, and
the spring element (54) being slid on a respective central piece (14) of the adjacent links (12),
**characterized in that** the spring element (54) is supported at its axial ends on respective detent connection sections (32) of the adjacent links (12), a respective outer part (38) of the respective link (12) being mounted to the associated central piece (14) by means of the detent connection sections (32).

2. The drag chain (10) according to claim 1, **characterized in that** the spring element (54) is compressed when the adjacent links (12) are in the fitted-together state.

3. The drag chain (10) according to either of the preceding claims, **characterized in that** the central piece (14) includes a base body (16) extending in the longitudinal direction A and having a cavity which is accessible via an insertion opening (18) on the face side, an edge surrounding the insertion opening (18) forming a holding surface (20) in the cavity.

4. The drag chain (10) according to claim 3, **characterized in that** two plug-in extensions (22) extend on the side of the base body (16) opposite to the insertion opening (18), the plug-in extensions (22) being spaced apart from each other in a direction substantially perpendicular to the longitudinal direction A and being elastically deflectable in this direction, the plug-in extensions (22) each including a round holding section (26) having a preferably convexly curved counter-holding surface (28) which, in the fitted-together state of the links (12), cooperate with the holding surface (20) of an adjacent link.

5. The drag chain (10) according to claim 4, **characterized in that** the total width of the holding sections (26) of the central piece (14) of a link (12) decreases as the distance from the base body (16) thereof increases.

6. The drag chain (10) according to any of claims 3 to 5, **characterized in that** the base body (16) has mutually aligned disassembly openings (30) which provide an access to the cavity of the base body (16), the vanishing line of the disassembly openings (30) preferably extending parallel to the deflection direction of the two plug-in extensions (22) located in the cavity.

7. The drag chain (10) according to any of the preceding claims, **characterized in that** the outer parts (38) of a link (32) are shaped such that gaps (52) that are opposite each other remain between the outer parts (38) and provide an access to the disassembly openings (30).

8. The drag chain (10) according to claim 6 or 7, **characterized by** a separate tool (64) which is formed as a wire bent in the shape of a triangle and having an interrupted leg (66), the free wire ends (68) of the tool (64) being elastically deflectable and insertable into the disassembly openings (30).

9. The drag chain (10) according to any of the preceding claims, **characterized in that** on a face side facing away from the base body (16), each of the detent connection sections (32) has a receiving opening (34) through which detent hooks (50) of an outer part (38) can be inserted and can snap into detent openings (36) of the respective detent connection section (32).

10. The drag chain (10) according to any of the preceding claims, **characterized in that** the outer parts (38) each include a first shell section (42) and a second shell section (44) adjoining in the axial direction and having a smaller outside diameter, so that a shoulder (46) is formed between the two shell sections (42, 44).

11. The drag chain (10) according to claim 10, **characterized in that** the second shell section (44) has a convexly shaped outer surface.

12. The drag chain (10) according to claim 10 or 11, **characterized in that** starting from the preferential orientation, a link (12) is inclinable in any desired direction relative to an adjacent link (12), the shoulder (46) of the adjacent link (12) constituting a stop which limits the range of inclination.

13. The drag chain (10) according to any of the preceding claims, **characterized by** at least one end piece (58; 60) having a central piece (14) which is firmly connected to a frame (62) and includes plug-in extensions (22) or an insertion opening (18) on an axial face side, the central piece (14) being flat on the opposite axial face side and forming a mounting plane with the frame (62) on this side.

14. The drag chain (10) according to claim 10 and claim 13, **characterized in that** shell sections (42; 44) are connected to the frame (62), which are formed to be substantially identical with the first or second shell sections (42 and 44, respectively) of the links (12).

## Revendications

1. Chaîne de guidage d'énergie (10), présentant une pluralité de membres (12) qui sont aptes à être emboîtés les uns sur les autres dans un sens longitudinal A et qui sont aptes à pivoter les uns par rapport aux autres et qui forment ensemble un canal de guidage pour le logement d'au moins un câble (56) ou d'au moins une conduite,
un élément ressort (54) séparé étant respectivement encastré entre deux membres (12) adjacents, lequel précontraint les membres adjacents (12) selon une orientation préférée, et
l'élément ressort (54) étant respectivement glissé sur une pièce médiane (14) des membres adjacents (12),
**caractérisée en ce que** l'élément ressort (54) prend appui, à ses extrémités axiales, sur des tronçons de raccordement par enclenchement (32) respectifs des membres adjacents (12), au moyen desquels une partie extérieure (38) respective du membre (12) respectif est montée sur la pièce médiane (14) associée.

2. Chaîne de guidage d'énergie (10) selon la revendication 1, **caractérisée en ce que** l'élément ressort (54) est refoulé à l'état emboîté des membres adjacents (12).

3. Chaîne de guidage d'énergie (10) selon l'une des revendications précédentes, **caractérisée en ce que** la pièce médiane (14) présente un corps de base (16) qui s'étend dans le sens longitudinal A et qui présente une cavité accessible par un orifice d'insertion (18) côté face frontale, un bord entourant l'orifice d'insertion (18) formant une face de retenue (20) dans la cavité.

4. Chaîne de guidage d'énergie (10) selon la revendication 3, **caractérisée en ce que** deux saillies enfichables (22) s'étendent du côté du corps de base (16) qui est opposé à l'orifice d'insertion (18), les saillies enfichables (22) étant espacées l'une de l'autre dans un sens sensiblement perpendiculaire au sens longitudinal A et étant aptes à être déviées élastiquement dans ce sens, les saillies enfichables (22) comportant chacune un tronçon de retenue rond (26) qui présente une face de retenue antagoniste (28) de préférence courbe de manière convexe, laquelle coopère avec la face de retenue (20) d'un membre adjacent à l'état emboîté des membres (12).

5. Chaîne de guidage d'énergie (10) selon la revendication 4, **caractérisée en ce que** la largeur totale des tronçons de retenue (26) de la pièce médiane (14) d'un membre (12) diminue avec une distance croissante de son corps de base (16).

6. Chaîne de guidage d'énergie (10) selon l'une des revendications 3 à 5, **caractérisée en ce que** le corps de base (16) présente des orifices de démontage (30) alignés les uns sur les autres qui créent un accès à la cavité du corps de base (16), la ligne de fuite des orifices de démontage (30) s'étendant de préférence parallèlement au sens de déviation des deux saillies enfichables (22) se trouvant dans la cavité.

7. Chaîne de guidage d'énergie (10) selon l'une des revendications précédentes, **caractérisée en ce que** les parties extérieures (38) d'un membre (32) sont formées de sorte que des fentes (52) opposées les unes aux autres restent entre les parties extérieures (38), lesquelles créent un accès aux orifices de démontage (30).

8. Chaîne de guidage d'énergie (10) selon la revendication 6 ou 7, **caractérisée par** un outil séparé (64) qui est réalisé sous forme de fil recourbé en forme de triangle présentant une branche interrompue (66), les extrémités de fil libres (68) de l'outil (64) étant aptes à être déviées élastiquement et à être introduites dans les orifices de démontage (30).

9. Chaîne de guidage d'énergie (10) selon l'une des revendications précédentes, **caractérisée en ce que** les tronçons de raccordement par enclenchement (32) présentent chacun d'un côté frontal détourné du corps de base (16) un orifice de réception (34) à travers lequel des crochets d'enclenchement (50) d'une partie extérieure (38) peuvent être introduits, lesquels peuvent s'enclencher dans des orifices d'enclenchement (36) du tronçon de raccordement par enclenchement (32) respectif.

10. Chaîne de guidage d'énergie (10) selon l'une des revendications précédentes, **caractérisée en ce que** les parties extérieures (38) présentent chacune un premier tronçon d'enveloppe (42) et un deuxième tronçon d'enveloppe (44) qui est adjacent dans le sens axial et qui présente un diamètre extérieur plus petit, de sorte qu'un talon (46) est formé entre les deux tronçons d'enveloppe (42, 44).

11. Chaîne de guidage d'énergie (10) selon la revendication 10, **caractérisée en ce que** le deuxième tronçon d'enveloppe (44) présente une surface extérieure formée de manière convexe.

12. Chaîne de guidage d'énergie (10) selon la revendication 10 ou 11, **caractérisée en ce qu'**un membre (12) est inclinable dans un sens quelconque par rapport à un membre adjacent (12) à partir de l'orientation préférée, le talon (46) du membre adjacent (12) formant une butée qui délimite la plage d'inclinaison.

13. Chaîne de guidage d'énergie (10) selon l'une des revendications précédentes, **caractérisée par** au moins une pièce d'extrémité (58 ; 60) qui présente une pièce médiane (14) qui est reliée de manière solidaire à un cadre (62) et qui présente d'un côté frontal axial des saillies enfichables (22) ou un orifice d'insertion (18), la pièce médiane (14) étant plane du côté frontal axial opposé et formant de ce côté ensemble avec le cadre (62) un plan de montage.

14. Chaîne de guidage d'énergie (10) selon la revendication 10 et la revendication 13, **caractérisée en ce que** des tronçons d'enveloppe (42 ; 44) sont reliés au cadre (62), lesquels sont réalisés sensiblement identiques au premier ou au deuxième tronçon d'enveloppe (42 et 44, respectivement) des membres (12).
